(19) **Europäisches Patentamt**

**European Patent Office**

**Office européen des brevets**

(11) **EP 0 561 349 B1**

(12) **EUROPEAN PATENT SPECIFICATION**

(45) Date of publication and mention
of the grant of the patent:
**12.01.2000 Bulletin 2000/02**

(51) Int Cl.[7]: **G01K 1/00**

(21) Application number: **93104273.3**

(22) Date of filing: **16.03.1993**

(54) **Electronic clinical thermometer**

Elektronisches klinisches Thermometer

Thermomètre médical électronique

(84) Designated Contracting States:
**BE DE FR GB IT NL SE**

(30) Priority: **17.03.1992 JP 6028692**
**17.03.1992 JP 6028992**

(43) Date of publication of application:
**22.09.1993 Bulletin 1993/38**

(73) Proprietor: **TERUMO KABUSHIKI KAISHA**
**Tokyo (JP)**

(72) Inventors:
• **Toriumi, Makoto, c/o Terumo Kabushiki Kaisha**
**Shizuoka-ken (JP)**
• **Ikeda, Makoto, c/o Terumo Kabushiki Kaisha**
**Shizuoka-ken (JP)**

(74) Representative:
**Winter, Brandl, Fürniss, Hübner, Röss, Kaiser,**
**Polte, Kindermann Partnerschaft**
**Patent- und Rechtsanwaltskanzlei**
**Alois-Steinecker-Strasse 22**
**85354 Freising (DE)**

(56) References cited:
**EP-A- 0 234 236    EP-A- 0 245 838**
**EP-A- 0 332 700    EP-A- 0 413 814**
**EP-A- 0 421 451    EP-A- 0 482 562**
**GB-A- 2 197 724**

**Description**

The present invention relates to an electronic clinical thermometer and, more particularly, to an electronic clinical thermometer capable of determining a prescribed mathematical equation for predicting equilibrium temperature in accordance with a change of detected temperature values in transition of temperature measurement time, calculating the determined prescribed mathematical equation, and displaying the obtained value as a measured body temperature.

Such a thermometer is known from GB-A-2 197 724.

In a conventional prediction type electronic clinical thermometer, when a detected temperature value is over a predetermined value and rate of temperature rise is over a predetermined value, it is determined as a starting point for calculation of a predicted equilibrium temperature. While when a variation of the predicted value is within a predetermined value, it is determined as the point where the prediction has been validated. When a predicted value is "Y", detected temperature is "T", and bias is "U", an equation for predicting equilibrium temperature is:

$$Y = T + U$$

Various methods for obtaining "U" are known. For example:

$$U = a_1 \times dT/dt + b_1$$

or

$$U = (a_2 \times t + b_2) \times dT + (c_2 \times t + d_2)$$

wherein the time elapsed from the starting point for prediction is "t".

In order to maintain the accuracy of bias U regardless of the subject or element to be measured, appropriate parameters $a_1$, $b_1$, $a_2$, $b_2$, $c_2$, and $d_2$ are determined for the prescribed mathematical equation. Various statuses of temperature rise are separated into some groups in accordance with the characteristics of the subject and element to be measured and a set of the parameters in accordance with a separated group is allotted to each mathematical equation. Furthermore, "U" is subjected to weighting in order to maintain the continuity of display values. For example, if it is assumed that a display value is H and weight function is $M = (t/50)^2$, $H = T + U \times M$ is held. The display value H is displayed on the LCD and becomes equal to the predicted value Y when $t \geq 50$ (seconds).

However, in the conventional prediction type electronic clinical thermometer, when the curve obtained from detected temperature values is not stable or the prescribed mathematical equation is inadequate, display is suspended and the detection is determined to be an error. In this case, no information can be obtained after the declaration and temperature detection must be performed again.

Accordingly, in the conventional prediction type electronic clinical thermometer, the characteristics of the subject and elements have been considered. However, external factors such as the condition of electronic clinical thermometer and environment during temperature detection period could not be considered. For example, when the temperature of the thermometer is not fully reduced during remeasurement of temperature value, the predicted temperature goes beyond the adequate range for prediction, thus resulting in decrease in the accuracy for equilibrium temperature prediction.

In the light of the above-described drawbacks, it is an object of the present invention to provide an electronic clinical thermometer in which prediction accuracy is maintained regardless of external factors during temperature measurement.

It is another object of the present invention to provide an electronic clinical thermometer capable of giving information on body temperature even if the prescribed mathematical equation for equilibrium temperature prediction was inadequate or stability of the curve obtained from predicted temperature values or detected temperature values could not be obtained.

These objects are solved by the subject matter of claim 1. Further advantageous modifications of the present invention are subject matter of the dependent claims.

Other features and advantages of the present invention will be apparent from the following description taken in conjunction with the accompanying drawings, in which like reference characters designate the same or similar parts throughout the figures thereof.

The accompanying drawings, which are incorporated and constitute a part of the specification, illustrate embodiments of the invention and, together with the description, serve to explain the principles of the invention.

Fig. 1 is a chart for describing the grouping of empirical data of an electronic clinical thermometer of the present embodiment;

Fig. 2 is a chart showing an example of curves of temperature rise of the electronic clinical thermometer of the present embodiment;

Fig. 3 is a diagram for describing the judgement of the initial temperature of the electronic clinical thermometer of the present embodiment;

Fig. 4 is a diagram for describing the correction in accordance with the initial temperature of the electronic clinical thermometer of the present embodiment;

Fig. 5 is a block diagram illustrating the construction of the electronic clinical thermometer of the present embodiment;

Fig. 6 is an external view of the electronic clinical thermometer of the present embodiment; and

Fig. 7 is a flowchart illustrating the operation of the electronic clinical thermometer of Fig. 5.

Preferred embodiments of the present invention will now be described in detail in accordance with the accompanying drawings. In the present embodiment, as an example of equilibrium temperature prediction, an electronic clinical thermometer determining a prescribed mathematical equation in accordance with the group classified beforehand is described. However the present invention is applicable to another prediction type electronic clinical thermometer.

<An example of equilibrium temperature prediction by the electronic clinical temperature>

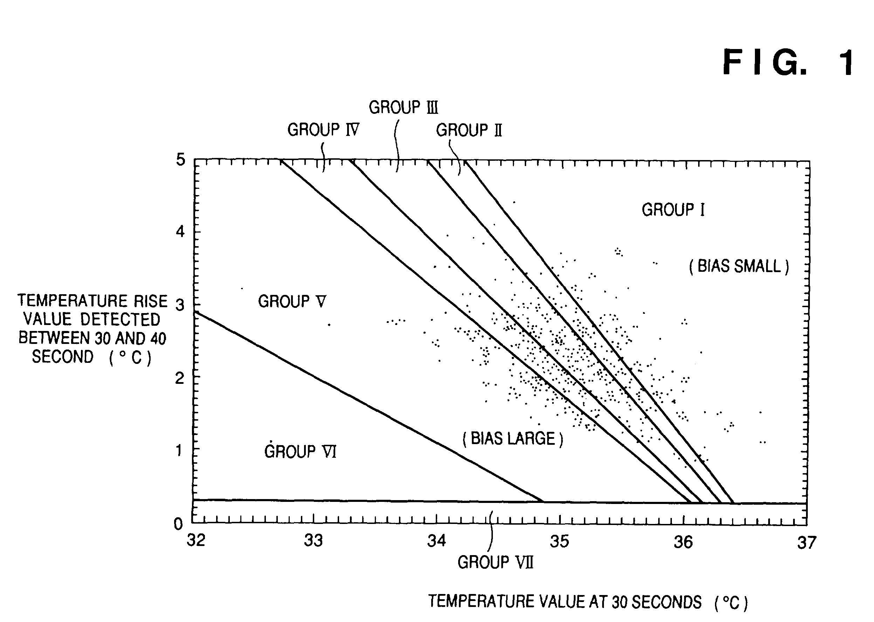

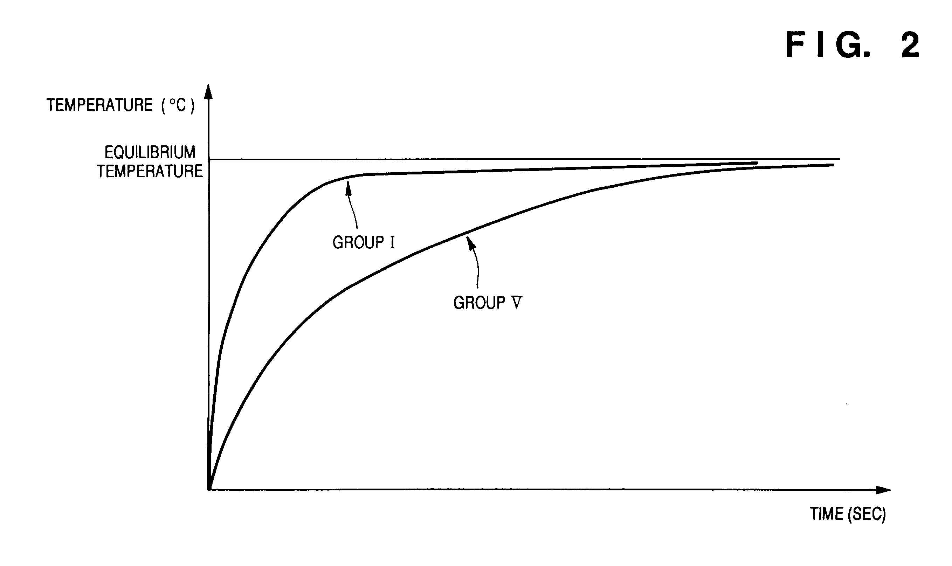

Figs. 1 and 2 are charts for describing the principal of equilibrium temperature prediction by the electronic clinical thermometer which determines a prescribed mathematical equation for prediction in accordance with the predetermined group.

In the prediction type electronic clinical thermometer, body temperature is sequentially measured after 600 seconds from the start to measure. The calculation for equilibrium temperature prediction starts with the starting point where detected temperature value is over 30 °C and the rate of rise in temperature is over 0.25 °C/4 seconds.

With a detected temperature value "T" and time elapsed from the starting point for equilibrium temperature prediction "t", the predicted value "Y" is given by the following equation:

$$U = (a \times t + b) \times dT + (c \times t + d) \qquad \text{bias}$$

$$Y = T + U$$

wherein a ∼ d: constants; dT: temperature rise in past 20 seconds.

The grouping is performed when the time elapsed from the starting point is 40 seconds (t = 40). Various statuses of measured data are grouped into group I through group V using the values of temperature rise (on the vertical axis of Fig. 1) in 30 ∼ 40 seconds and the temperature values at 30 seconds (on the horizontal axis of Fig. 1). In group VI indicating "non-predictable" and group VII indicating "non-human body", an equilibrium temperature prediction is not performed and a measured value is displayed as it is. Group I is the group which responds to heat more quickly than any other groups. The feature of group I is that the initial temperature is considerably high and temperature rise occurs in a short period of time, and bias required for prediction is small. On the other hand, group V is the group which responds to heat least quickly than any other groups. The feature of group V is that the initial temperature is low and temperature rise occurs for a long period of time, and the required bias is large (refer to Fig. 2). The above relationships were obtained from numerous measured samples.

After 40 seconds from the starting point, the calculation for equilibrium temperature prediction is made using coefficients a ∼ d in accordance with each group. The coefficients a ∼ d in each group in 40 ∼ 60 seconds are listed below:

Group I a = 0.03859: b = -0.56178: c = -0.00642: d = 0.78483
Group II a = 0.03363: b = -0.15209: c - -0.00623: d = 0.7967
Group III a = 0.03363: b = -0.15209: c = -0.00389: d = 0.7977
Group IV a = 0.03363: b = -0.15209: c = -0.00674: d = 1.0937
Group V a = 0.06137: b = -0.85641: c = -0.00701: d = 0.95034

The coefficients a ∼ d are respectively changed to the predetermined values every 20 seconds between 40 and 120 seconds.

To maintain the continuity of display values, "U" is subjected to weighting. When a display value is H, the following equations are held until 50 seconds:

$$H = T + U \times M_1$$

$$M_1 = (t/50)^2 \qquad \text{Weight function}$$

The display value H is displayed on an LCD. The display value H is equal to the predicted value Y when $t \geq 50$ (sec).

In 50 ~ 120 seconds, $H = T + U \times M_2$, $M_2 = 1$ is held without weighting. If the prediction is validated, a buzzer sounds in 50 ~ 120 seconds. The conditions which should be satisfied in order for prediction to be validated are:

(1) A rise in temperature of actually measured value is less than a predetermined value determined for each group and coefficient interval; and
(2) Stability of predicted values is obtained (A slop of the regression line obtained from the predicted value is less than a predetermined value).

For example, the conditions which should be satisfied in order for prediction to be validated in temperature rise between 40 and 60 seconds are:

Group I $\leq 0.19$ °C/20 sec
Group II $\leq 0.23$ °C/20 sec
Group III $\leq 0.20$ °C/20 sec
Group IV $\leq 0.15$ °C/20 sec
Group V $\leq 0.17$ °C/20 sec

On the other hand, when the predicted value is Y(t) at "t", a slope KA of the regression line of predicted value can be obtained as follows:

$$SY = Y(t) + Y(t-2) + Y(t-4) + Y(t-6) + Y(t-8)$$

$$+ (t-10)$$

$$STY = 2 * Y(t-2) + 4 * Y(t-4) + 6 * Y(t-6)$$

$$+ 8 * Y(t-8) + 10 * Y(t-10)$$

$$KA = 20 * (SY/14 + STY/70)$$

When KA is less than 0.04 °C/20 seconds, it is judged that the curve of the predicted values is stable.

When the prediction is not validated before 120 seconds, it is automatically validated at 120 seconds.

After 120 seconds, the bias $U_{120}$ when t = 120 (sec) is used and it is determined as follows:

$$H = T + U_{120} \times M_3$$

$$M_3 = A \times t + B$$

"A" and "B" are constants and changed at 270 seconds. $M_3$ is represented by the line graph when $M_3 = 1$ at 120 seconds and $M_3 = 0$ at 600 seconds. After 600 seconds, the detected temperature value T is displayed as display temperature H as it is.

The latest equilibrium temperature prediction method of the prediction type electronic clinical thermometer is described above in general.

<Example of the first improvement in equilibrium temperature prediction>

In the above prediction method, predicted value becomes beyond the adequate range because of external factors such as the condition of the thermometer and environment, thus the accuracy for equilibrium temperature prediction is considerably decreased. In the present embodiment, the following modification is performed in order to improve the accuracy. In this embodiment, it is assumed that the initial temperature of the temperature detection unit of the thermometer is considerably high. For example, it is the case where remeasurement of temperature is performed immediately after the previous measurement or where a room temperature is high.

(Example 1)

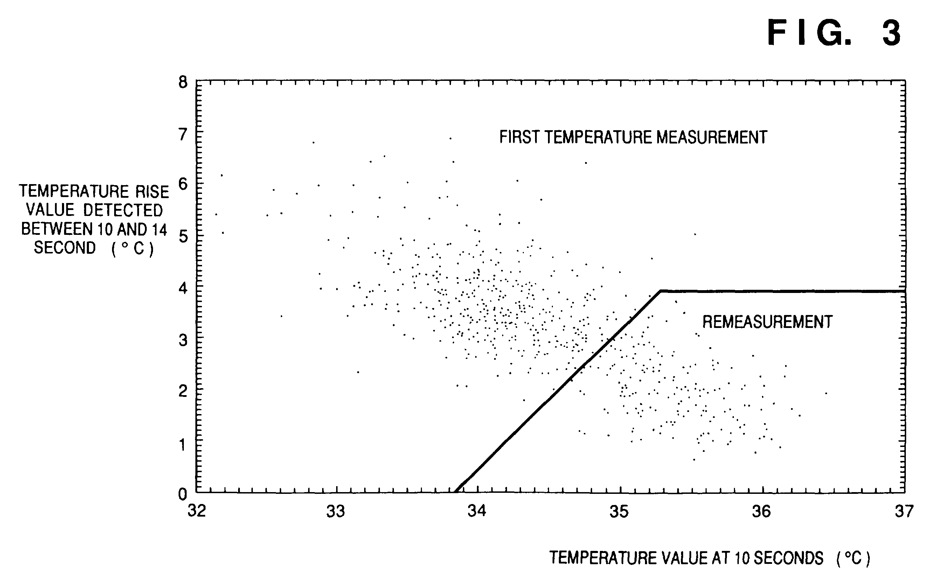

Whether the initial temperature is high is judged from the value of temperature rise ($H_{SB}$) during 10 ~ 14 seconds from the start of prediction and the temperature values (H10) at 10 seconds. For example, since the temperature at the start of measurement is high and rate of temperature rise is small, data of remeasurement of temperature has a tendency to concentrate into the right bottom of the chart, as shown in Fig. 3. Note that the values of temperature rise ($H_{SB}$) are plotted on the vertical axis and temperature values ($H_{10}$) on the horizontal axis.

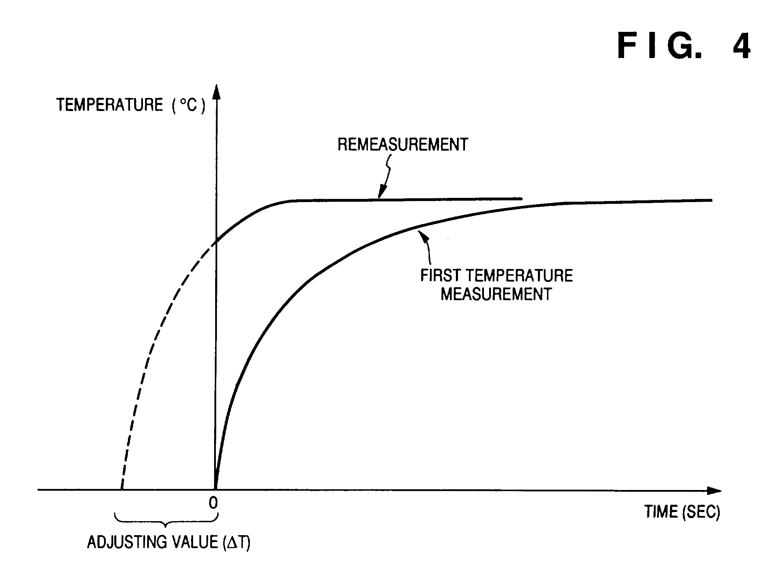

In this case, since the initial temperature is higher than that of the first temperature detection, if the equation $U = (a \times t + b) \times dT + (c \times t + d)$ is used to obtain the bias, the calculation will be executed under the condition where "t" is shifted as Fig. 4 and the prediction accuracy is considerably decreased. Therefore, "t" needs to be adjusted.

To adjust "t", first $BR = (H_{10} - 30)/H_{SB}$ is obtained. BR becomes greater as the temperature value at the starting point for equilibrium temperature detection becomes higher and temperature rise after that becomes smaller. As a result, the predicted temperature value differs from that of the normal temperature detection. Accordingly, it is determined based on BR value whether or not a time lag needs to be corrected. That is, when BR is greater than a predetermined value, $t' = t - \Delta t$, the bias $U = (a \times t' + b) \times dT + (c \times t' + d)$ is calculated.

When it is determined that the initial temperature value is higher than usual, it is arranged so that the other coefficients (a ~ d) is used.

It is preferable to store each of the adjusting values $\Delta t$ or other coefficients (a ~ d) in a ROM table corresponding to BR. Examples of the adjusting values $\Delta t$ or other coefficients (a ~ d) are shown in Table 1.

Table 1

ADJUSTING VALUE $\Delta t$

| BR | 0~12 | 13~15 | 16~20 | 21~24 | 25~29 | 30~34 | |
|---|---|---|---|---|---|---|---|
| $\Delta t$ | 14 | 16 | 18 | 20 | 22 | 24 | |

| BR | 35~39 | 40~44 | 45~50 | 51~56 | 57~62 | 63~68 | 69~ |
|---|---|---|---|---|---|---|---|
| $\Delta t$ | 26 | 28 | 30 | 32 | 34 | 36 | 38 |

COEFFICIENTS

a ~ d in 40 ~ 60 seconds as an example

a = 0.8628    b = -3.584    c = -0.0207    d = 1.664

(Example 2)

It can judge that an initial temperature value is considerably high, in the case where a curve obtained from detected temperature values is gradually decreased, and turns to increase at the point where the thermometer is attached to the region to be measured.

(Example 3)

To judge if the present measurement is a first measurement or remeasurement immediately after the previous measurement, the time elapsed from the end of previous measurement to the start of present measurement can be measured.

<First example of the construction of the electronic clinical thermometer>

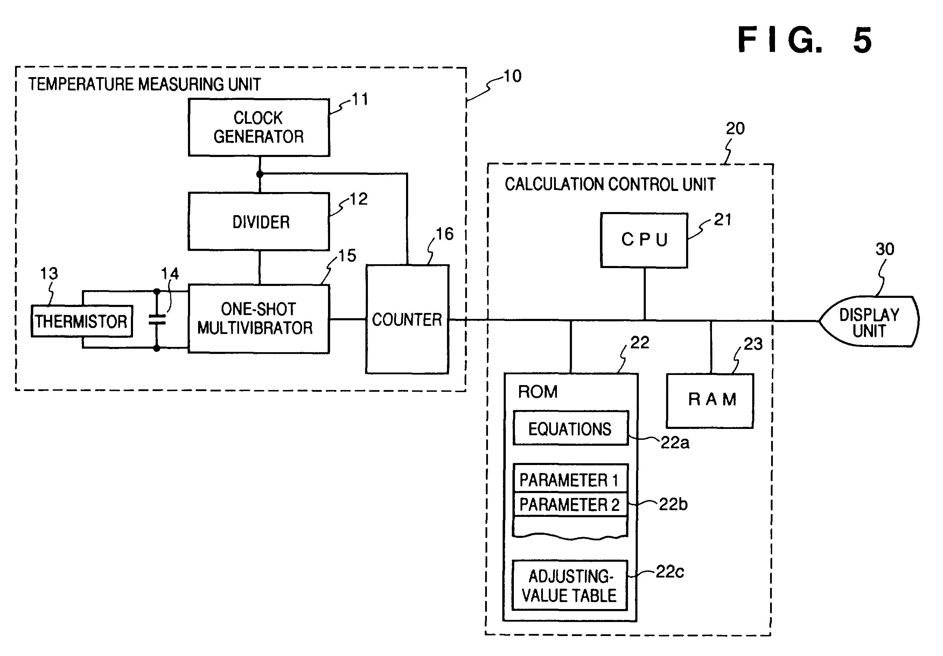

Fig. 5 is a block diagram illustrating the construction of the electronic clinical thermometer of the present invention.

The present electronic clinical thermometer comprising a temperature measuring unit 10 for measuring a temperature value and outputting the measured value as a digital value, calculation control unit 20 for obtaining a predicted temperature value from the measured value and controlling the electronic clinical thermometer, and display unit 30 for displaying result of measurement.

The temperature measuring unit 10 comprises a thermistor 13 and capacitor 14 provided in a thermo-sensitive unit in parallel, one-shot multivibrator 15 for pulse generation in accordance with a time constant of the thermistor 13 and capacitor 14, clock generator 11 for generating a reference clock, divider 12 for dividing the reference clock, and counter 16 for counting the number of clocks from the clock generator 11 during the period where outputs of the one-shot multivibrator 15 is "high". In this construction, the detected temperature value is obtained from the change of the value of the counter 16 in accordance with the temperature of the thermistor 13 and outputted as a digital value. However, this construction is only one example. This does not impose a limitation upon the present invention.

The calculation control unit 20 comprises a CPU 21 for calculation and control, ROM 22 having a prescribed equation storage 22a for storing a control program and mathematical equations for equilibrium temperature prediction used in the electronic clinical thermometer, parameter storage 22b for storing the parameters a, b, c, d, and adjusting-value table 22c for storing the adjusting values of the prescribed equations (e.g. $\Delta t$ or other coefficients a $\sim$ d), and RAM 23 for storing the temperatures for auxiliary storage and measured temperature in a time sequence. In the above construction, in accordance with the program, the calculation control unit 20 performs the operational control of the present electronic clinical thermometer such as judgment in an initial temperature measurement, grouping of the measured data, calculation for equilibrium temperature prediction, and judgment if the conditions for validating the prediction are satisfied.

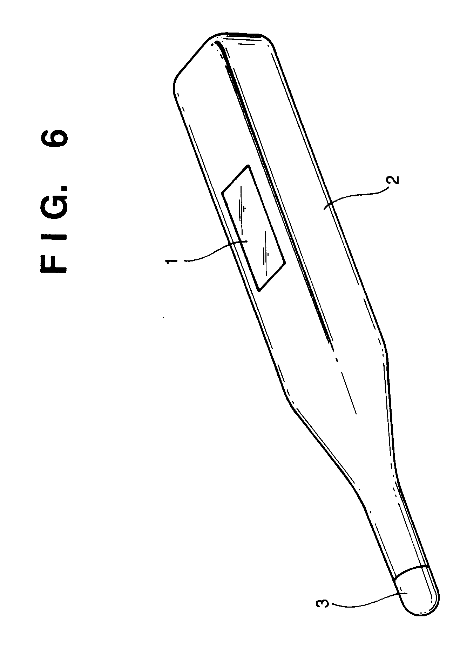

Fig. 6 shows an exterior view of the body of the electronic clinical thermometer. The body is comprised of a liquid crystal display (LCD) 1, case 2, and metallic tip cap 3 for conducting body temperature to the thermistor 13 of Fig. 5.

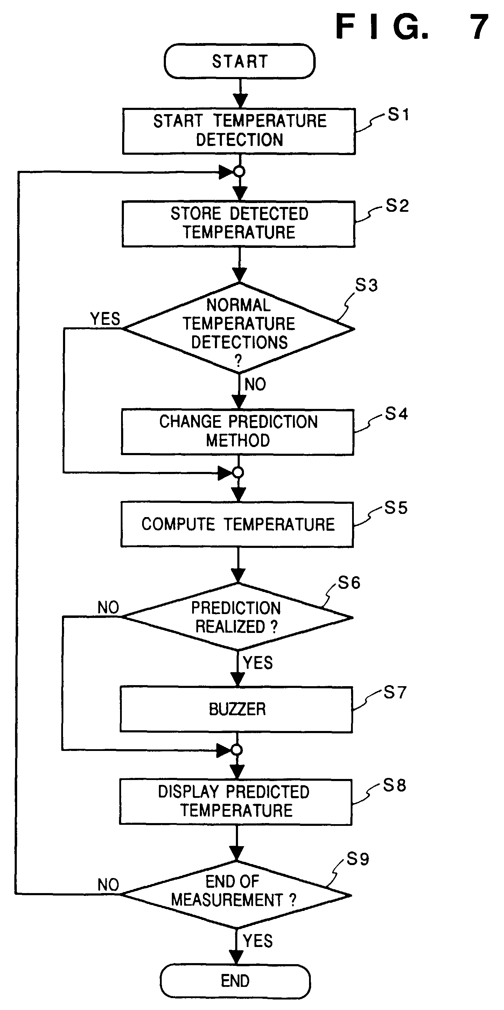

Fig. 7 is a flowchart illustrating the procedure for the operation of the electronic clinical thermometer. The buzzer sounds when the conditions which can obtain sufficient accuracy for equilibrium temperature prediction are satisfied.

When the power is supplied by a predetermined start switch, an initialization is performed at step S1. At step S2, the data from the temperature measuring unit 10 is stored in correspondence to the time sequence. At step S3, it is judged whether or not the measurement is an ordinary temperature measurement based on the past temperature rise. If it is judged as an non-ordinary temperature measurement (e.g. remeasurement immediately after the previous measurement), adjustment for the calculation of equilibrium temperature prediction (the adjusting value $\Delta t$ or other coefficients a $\sim$ d) is performed at step S4.

When the adjusting value is determined at step S4, the calculation for prediction is performed in accordance with the prescribed equation at step S5. Subsequentially, it is checked if the condition for the prediction to be valid is satisfied at step 6.

When the condition is not satisfied, the process proceeds to step S8 where the predicted temperature value is displayed on the LCD and the process returns from step S9 to step S2 where the measurement is continued. When the prediction is validated, the process proceeds from step S6 to step S7 where the buzzer sounds (audible signal) to inform of this. Subsequently, the process proceeds to step S8 where the predicted temperature value is displayed on the LCD and the process returns from step S9 to step S2 where the measurement is continued. The measurement is repeated until the condition to end this processing is satisfied. When the condition is satisfied, such as a case where the thermometer is removed from the region to be measured, the measurement ends.

According to the present embodiment, the electronic clinical thermometer which can obtain a high predictive accuracy can be provided regardless of the external factors during the detection of temperature.

<Example of second improvement in temperature prediction>

In the present embodiment, predicted values and measured values are observed during and after the grouping of various statuses of the measured data which is performed 40 seconds after the start of the prediction. If the grouping is inadequate or there is a variation in the detected value, the predicted value is flash-displayed at 120 seconds where the prediction is automatically validated.

A feature of the invention is to flash-display the predicted value when a variation of the predicted value is considerably large at the automatic validation, because if the predicted value is displayed as it is, the error becomes larger. That is, when the slope KA of the regression line of the predicted values at the automatic validation is over the predetermined value ($\pm 0.31\,^{\circ}$C/20 sec), it is regarded that the curve of the predicted values is unstable and the predicted value is flash-displayed.

According to the present embodiment, it is possible to provide the electronic clinical thermometer capable of presenting the information on body temperature even if the mathematical equation for equilibrium temperature prediction was inadequates.

As many apparently widely different embodiments of the present invention can be made without departing from the scope thereof, it is to be understood that the invention is not limited to the specific embodiments thereof except as defined in the appended claims.

## Claims

1. An electronic clinical thermometer comprising:

    temperature detection means (10) for detecting a temperature (T) of a region to be measured,
    calculation means (20) for calculating a first mathematical equation Y = U + T, wherein Y is a predicted equilibrium temperature and U is a bias given by a second mathematical equation

$$U = \{a \times (t - \Delta t) + b\} \times dT + \{c \times (t - \Delta t) + d\},$$

    where dT: temperature rise, a to d: coefficients, t: elapsed time, $\Delta t$: adjusting value for correcting a time lag, said calculation is based on a change of temperature to predict the equilibrium temperature (Y); judging means (20) for judging whether an initial detected temperature is high and said calculation means (20) predicts the equilibrium temperature (20) based on temperature detected after a point of attaching the thermometer to a region to be measured, and
    when the initial detected temperature is judged as high, said calculation means (20) changes the coefficients (a to d) or the adjusting value ($\Delta t$) of the second mathematical equation,
    and calculates the first and second mathematical equation using the changed coefficients or adjusting value to predict the equilibrium temperature (Y), and
    display means (30) for displaying the predicted equilibrium temperature,
    said display means (30) further informs of insufficiency of the reliability of the displayed equilibrium temperature by flash-displaying of the displayed equilibrium temperature.

2. The electronic clinical thermometer according to claim 1, wherein said judging means (20) judges that an initial temperature is high in the case where the detected temperature values are gradually decreasing and then turn to increase at a point of attaching the thermometer to a region to be measured.

3. The electronic clinical thermometer according to claim 1 or 2, wherein said judging means (20) judges that an initial temperature is high based on detected temperature values and rate of temperature rise after passage of a predetermined time from start of measurement.

4. The electronic clinical thermometer according to any one of claims 1 to 3, wherein said judging means (20) includes means for measuring a time elapsed from the end of previous measurement to the start of present measurement, and judges that an initial temperature is high when the elapsed time is shorter than a predetermined value.

**Patentansprüche**

1. Elektronisches Fieberthermometer, das aufweist:

   eine Temperatur-Erfassungseinrichtung (10) zum Erfassen einer Temperatur (T) eines zu messenden Bereichs;

   eine Berechnungseinrichtung (20) zum Berechnen einer ersten mathematischen Gleichung

   $Y = U + T$, wobei Y eine vorhergesagte Gleichgewichtstemperatur ist und U eine Vorbeeinflussung ist, die durch eine zweite mathematische Gleichung

   $U = \{a \times (t - \Delta t) + b\} \times dT + \{c \times (t - \Delta t) + d\}$ gegeben ist, wobei dT: Temperaturanstieg, a bis d: Koeffizienten, t: verstrichene Zeit, $\Delta t$: Einstellwert zum Korrigieren einer Zeitverzögerung,

   wobei die Berechnung auf der Grundlage einer Temperaturänderung steht, um die Gleichgewichtstemperatur (Y) vorherzusagen;

   eine Bewertungseinrichtung (20) zum Bewerten, ob eine zu Beginn erfaßte Temperatur hoch ist, und wobei die Berechnungseinrichtung (20) die Gleichgewichtstemperatur (Y) auf der Grundlage einer Temperatur vorhersagt, die nach einem Punkt eines Aufsetzens des Thermometers auf einen zu messenden Bereich erfaßt wird, und

   wobei, wenn die zu Beginn erfaßte Temperatur als hoch bewertet wird, die Berechnungseinrichtung (20) die Koeffizienten (a bis d) oder den Einstellwert ($\Delta t$) der zweiten mathematischen Gleichung ändert und die erste und zweite mathematische Gleichung unter Verwendung der geänderten Koeffizienten oder des geänderten Einstellwerts berechnet, um die Gleichgewichtstemperatur (Y9 vorherzusagen, und

   eine Anzeigeeinrichtung (30) zum Anzeigen der vorhergesagten Gleichgewichtstemperatur,

   wobei die Anzeigeeinrichtung (30) weiterhin mittels eines blinkenden Anzeigens der angezeigten Gleichgewichtstemperatur über eine Unzulänglichkeit der Zuverlässigkeit der angezeigten Gleichgewichtstemperatur unterrichtet.

2. Elektronisches Fieberthermometer nach Anspruch 1, bei dem die Bewertungseinrichtung (20) in dem Fall bewertet, daß eine Anfangstemperatur hoch ist, in dem sich die erfaßten Temperaturwerte allmählich verringern und sich dann ändern, sich zu dem Punkt eines Aufsetzens des Thermometers auf einen zu messenden Bereich zu erhöhen.

3. Elektronisches Fieberthermometer nach Anspruch 1 oder 2, bei dem die Bewertungseinrichtung (20) auf der Grundlage von erfaßten Temperaturwerten und einer Geschwindigkeit eines Temperaturanstiegs nach einem Verstreichen einer vorbestimmten Zeit von einem Start einer Messung bewertet, daß eine Anfangstemperatur hoch ist.

4. Elektronisches Fieberthermometer nach einem der Ansprüche 1 bis 3, bei dem die Bewertungseinrichtung (20) eine Einrichtung zum Messen einer Zeit beinhaltet, die von dem Ende einer vorhergehenden Messung bis zu dem Start einer derzeitigen Messung verstrichen ist, und bewertet, daß eine Anfangstemperatur hoch ist, wenn die verstrichene Zeit kürzer als ein vorbestimmter Wert ist.

**Revendications**

1. Thermomètre médical électronique comprenant :

   des moyens de détection de température (10) pour détecter une température (T) d'une région à mesurer, des moyens de calcul (20) pour calculer une première équation mathématique $Y = U + T$, dans laquelle Y est une température d'équilibre prédite et U est une polarisation donnée par une seconde équation mathématique $U = \{a \times (t - \Delta t) + b\} \times dT + \{c \times (t - \Delta t) + d\}$, où dT est l'élévation de la température, a à d sont des coefficients, t est le temps écoulé, $\Delta t$ est la valeur d'ajustement pour corriger un retard, ledit calcul est basé sur une variation de la température pour prédire la température d'équilibre (Y),

des moyens de jugement (20) pour juger si une température détectée initiale est élevée ou non, et lesdits moyens de calcul (20) prédisent la température d'équilibre en s'appuyant sur la température détectée après un point de fixation du thermomètre au niveau d'une région à mesurer, et lorsque la température détectée initiale est jugée comme étant élevée, lesdits moyens de calcul (20) modifient les coefficients (a à d) ou la valeur d'ajustement ($\Delta t$) de la seconde équation mathématique, et calculent les première et seconde équations mathématiques en utilisant les coefficients ou la valeur d'ajustement modifiés pour prédire la température d'équilibre (Y), et

des moyens d'affichage (30) pour afficher la température d'équilibre prédite, lesdits moyens d'affichage (30), de plus, informent de l'insuffisance de la fiabilité de la température d'équilibre affichée en faisant clignoter la température d'équilibre affichée.

2. Thermomètre médical électronique selon la revendication 1, dans lequel lesdits moyens de jugement (20) jugent qu'une température initiale est élevée dans le cas où les valeurs de température détectées diminuent graduellement et, ensuite, augmentent à un instant de fixation du thermomètre au niveau d'une région à mesurer.

3. Thermomètre médical électronique selon la revendication 1 ou 2, dans lequel lesdits moyens de jugement (20) jugent qu'une température initiale est élevée en s'appuyant sur les valeurs de température détectées et sur la vitesse d'élévation de la température après l'écoulement d'un temps prédéterminé depuis le début de la mesure.

4. Thermomètre médical électronique selon l'une quelconque des revendications 1 à 3, dans lequel lesdits moyens de jugement (20) comprennent des moyens pour mesurer un temps écoulé depuis la fin de la mesure précédente jusqu'au début de la présente mesure, et jugent qu'une température initiale est élevée lorsque le temps écoulé est inférieur à une valeur prédéterminée.

# F I G.  1

FIG. 2

EP 0 561 349 B1

# FIG. 3

TEMPERATURE RISE VALUE DETECTED BETWEEN 10 AND 14 SECOND (°C)

FIRST TEMPERATURE MEASUREMENT

REMEASUREMENT

TEMPERATURE VALUE AT 10 SECONDS (°C)

EP 0 561 349 B1

# FIG. 4

EP 0 561 349 B1

EP 0 561 349 B1

EP 0 561 349 B1

# FIG. 6

15

# F I G. 7

```
                    ┌──────────┐
                    │  START   │
                    └────┬─────┘
                         ▼
              ┌────────────────────┐
              │ START TEMPERATURE  │──── S1
              │     DETECTION      │
              └──────────┬─────────┘
                         ▼
              ┌────────────────────┐
              │  STORE DETECTED    │──── S2
              │    TEMPERATURE     │
              └──────────┬─────────┘
                         ▼
         YES        ◇ NORMAL ◇
      ◄──────────  TEMPERATURE  ──── S3
                   DETECTIONS
                        ?
                         │ NO
                         ▼
              ┌────────────────────┐
              │ CHANGE PREDICTION  │──── S4
              │      METHOD        │
              └──────────┬─────────┘
                         ▼
              ┌────────────────────┐
              │ COMPUTE TEMPERATURE│──── S5
              └──────────┬─────────┘
                         ▼
         NO       ◇ PREDICTION ◇ ──── S6
      ◄──────────  REALIZED ?
                         │ YES
                         ▼
              ┌────────────────────┐
              │      BUZZER        │──── S7
              └──────────┬─────────┘
                         ▼
              ┌────────────────────┐
              │ DISPLAY PREDICTED  │──── S8
              │    TEMPERATURE     │
              └──────────┬─────────┘
                         ▼
         NO        ◇ END OF ◇ ──── S9
      ◄──────────  MEASUREMENT ?
                         │ YES
                         ▼
                    ┌──────────┐
                    │   END    │
                    └──────────┘
```